# EUROPÄISCHE PATENTSCHRIFT

(11) **EP 3 469 677 B1**
(45) Veröffentlichungstag und Bekanntmachung des Hinweises auf die Patenterteilung: **15.12.2021**
(21) Anmeldenummer: 17748436.7
(22) Anmeldetag: 24.07.2017
(51) Int. Cl.: H02J 3/04, B60M 3/02, H02J 3/38

(54) **VERFAHREN ZUR STROMVERSORGUNG UND STROMVERSORGUNG FÜR AN EINER BAHNSTRECKE ANGEORDNETE BAHNBETRIEBSELEMENTE**
METHOD FOR POWER SUPPLY AND POWER SUPPLY FOR RAILWAY OPERATING ELEMENTS ARRANGED ON A RAILWAY LINE
PROCÉDÉ D'ALIMENTATION ÉLECTRIQUE ET ALIMENTATION ÉLECTRIQUE POUR DES ÉLÉMENTS DE TRAFIC FERROVIAIRE DISPOSÉS SUR UN TRONÇON DE VOIE

(30) Priorität: 29.07.2016 DE 102016214051
(43) Veröffentlichungstag der Anmeldung: 17.04.2019
(73) Patentinhaber: Siemens Mobility GmbH, 81739 München (DE)
(72) Erfinder: OKYERE, Philip Fosu, 38108 Braunschweig (DE); SEIFERT, Matthias, 38114 Braunschweig (DE)
(86) Internationale Anmeldenummer: PCT/EP2017/068632
(87) Internationale Veröffentlichungsnummer: WO 2018/019763

(56) Entgegenhaltungen:
- EP-A1- 1 329 786
- US-A- 5 760 492
- US-A1- 2011 284 697

## Beschreibung

Es ist bekannt, zur Steuerung des Bahnbetriebs an einer Bahnstrecke Bahnbetriebselemente anzuordnen, bei denen es sich in der Regel um Stellglieder oder Sensoren handelt. Die Bahnstrecke kann dabei zur Stromversorgung der Bahnbetriebselemente aus einer Stromquelle ohne Weiteres mehrere Kilometer lang sein, so dass auch die Bahnbetriebselemente mit Energie über diese Länge versorgt werden müssen. In Abhängigkeit von der Länge der Bahnstrecke, des für die Stromversorgung benutzten Leiterquerschnitts und anderen Leitereigenschaften sowie des jeweiligen Leistungsbedarfs der Bahnbetriebselemente fällt mehr oder weniger Spannung an der Energieübertragungsstrecke mit den Bahnbetriebselementen ab. Es muss daher sehr aufwändig für eine ausreichende Spannung am jeweiligen Einsatzort der Bahnbetriebselemente gesorgt werden, was insbesondere eine exakte Projektierung erfordert.

Bahnbetriebselemente müssen nicht nur jeweils mit Betriebsenergie versorgt werden, sondern müssen auch einen Informationsaustausch sicherstellen. In einer neuen Generation von Bahnbetriebselementen werden intelligente Bahnbetriebselemente benutzt, bei denen Energie und Informationsaustausch getrennt geführt werden. Die Informationen der Bahnbetriebselemente unterliegen dabei strengen Sicherheitsanforderungen, wobei die Informationen aber erst nach dem Anlegen einer ausreichenden Eingangsspannung zur Verfügung stehen. Die Stromversorgung wird bestenfalls durch ein Diagnosesystem ohne besondere Sicherheitseigenschaften überwacht. Verwendete, mikroprozessor-gestützte Diagnosesysteme benötigen zu ihrer korrekten Information eine definierte Versorgungsspannung, die aber zum Zeitpunkt des Einschaltens der Bahnbetriebselemente noch nicht anliegt. Auch im Fehlerfall kann durch ein Fehlen der Energieversorgung, z. B. infolge einer Leitungsunterbrechung oder bei einer Reduktion der Spannung durch einen Isolationsschaden, möglicherweise eine Statusmeldung durch ein gegebenenfalls vorhandenes Diagnosesystem nicht mehr rechtzeitig erfolgen. Außerdem sind andere Fehlerquellen denkbar, die eine Diagnose auch bei korrekt anliegender Versorgungsspannung unmöglich machen.

Bisher wird die Stromversorgung von Bahnbetriebselementen an einer Bahnstrecke bei der Errichtung in einem aufwändigen Projektierungsprozess geplant, vermessen, gegebenenfalls eingestellt und von einem Gutachter abgenommen. Dazu werden Schaltnetzteile mit sogenannten Weitbereichseingängen verwendet, die gewisse Spannungsschwankungen am Eingang tolerieren. Eine Unterbrechung der Stromversorgung kann auch durch lokale Energiespeicher kompensiert werden.

Die Erfindung betrifft ein Verfahren zur Stromversorgung für an einer Bahnstrecke angeordnete Bahnbetriebselemente mit mindestens einer Unterstation mit einer Stromversorgungsuntereinheit für mindestens jeweils ein angeschlossenes der Bahnbetriebselemente, bei dem mittels einer eingangsseitigen Kontrolleinheit der Unterstation der Stromverbrauch in der Unterstation definiert in Schritten mit entsprechender Änderung der Spannung der Stromversorgungsuntereinheit bis zur Nennspannung des Bahnbetriebselements an der Unterstation unter Erzeugung einer kodierten Nachricht verändert wird.

Ein gattungsgemäßes Verfahren ist aus der Druckschrift US 2011/0284697 A1 bekannt.

Der Erfindung liegt die Aufgabe zugrunde, ein Verfahren zur Stromversorgung für an einer Bahnstrecke angeordnete Bahnbetriebselemente vorzuschlagen, das sich zeit- und kostengünstig einrichten lässt.

Zur Lösung dieser Aufgabe ist bei dem erfindungsgemäßen Verfahren gemäß Patentanspruch 1 vorgesehen, dass an einer Kopfstation, an welche die mindestens eine Unterstation angeschlossen ist, eine Ausgangsspannung zur Verteilung auf die mindestens eine Unterstation zur Verfügung gestellt wird, wobei eine Kontrolleinrichtung der Kopfstation, welche über eine elektrische Verbindung mit einer Stromversorgungseinrichtung der Kopfstation verbunden ist, über eine weitere elektrische Verbindung auf die Stromversorgungseinrichtung einwirkt und auf die kodierte Nachricht hin die Ausgangsspannung unter Erzielung der Nennspannung für das Bahnbetriebselement an der Stromversorgungsuntereinheit entsprechend verändert, und dass die Stromversorgungsuntereinheit bei Erreichen der Nennspannung dem Bahnbetriebselement zugeschaltet wird.

Ein wesentlicher Vorteil des erfindungsgemäßen Verfahrens besteht darin, dass es eine selbsttätige Stromversorgung für an einer Bahnstrecke angeordnete Bahnbetriebselemente nach Art eines Regelsystems bereitstellt, so dass aufwändige Projektierungsprozesse eingespart werden können. Mit dem erfindungsgemäßen Verfahren kann eine Stromversorgung für an einer Bahnstrecke angeordnete Bahnbetriebselemente somit zeit- und kostengünstig eingeführt werden.

Das erfindungsgemäße Verfahren ist nicht nur dazu geeignet, Bahnbetriebselemente mit einer einzigen mit der Kopfstation in Reihe liegenden Unterstation mit Betriebsenergie zu versorgen, sondern ist in vorteilhafter Weise auch zur Versorgung weiterer Unterstationen geeignet, indem mit einer mit der Kontrolleinheit verbindbaren weiteren Kontrolleinheit der einen Unterstation eine Kontrollanordnung mit einer nachgeordneten weiteren Stromversorgungsuntereinheit einer weiteren Unterstation verbunden wird und mittels der Kontrollanordnung der weiteren Unterstation der Stromverbrauch in der weiteren Unterstation definiert in Schritten mit entsprechender Änderung der Ausgangsspannung der Kontrolleinrichtung der Kopfstation und der Spannung an der Stromversorgungsuntereinheit bis zur Nennspannung des Bahnbetriebselements der weiteren Unterstation unter Erzeugung einer kodierten Nachricht verändert wird, wobei
die weitere Stromversorgungsuntereinheit bei Erreichen der Nennspannung dem Bahnbetriebselement zugeschaltet wird.

Dabei ist selbstverständlich keine Beschränkung auf die Verwendung einer weiteren Unterstation gegeben, sondern es lassen sich eine Vielzahl von Unterstationen entlang einer Bahnstrecke vorsehen, wobei dies selbstverständlich davon abhängig ist, welche Spannung an der Kopfstation insgesamt zur Verfügung gestellt wird, um diese dann auf die verschiedenen Unterstationen zu verteilen.

Die Kontrolleinheit und auch die Kontrollanordnung der Unterstation und weiterer Unterstationen können in unterschiedlicher Weise ausgeführt sein; als vorteilhaft wird es angesehen, wenn in der Kontrolleinheit und in der Kontrollanordnung schaltbare Verbraucher zur Änderung der Spannung in definierten Schritten und zur Erzeugung der kodierten Nachrichten verwendet werden.

Als vorteilhaft hat es sich ferner herausgestellt, wenn bei dem erfindungsgemäßen Verfahren die bei seinem Ablauf gebildeten kodierten Nachrichten in der Kopfstation überwacht werden.

Mit der Überwachung der kodierten Nachrichten in der Kopfstation ergibt sich in vorteilhafter Weise die weitere Möglichkeit, mit einem Ausbleiben einer kodierten Nachricht eine Leitungsunterbrechung zu signalisieren, diese kann dann gegebenenfalls in einem zugeordneten Stellwerk erfasst werden.

Ferner ist es bei dem erfindungsgemäßen Verfahren vorteilhaft, dass mit einem Ausbleiben einer erwarteten Spannungserhöhung ein Isolationsschaden signalisiert wird.

Auch lässt sich mit dem erfindungsgemäßen Verfahren eine Fehlermeldung in vorteilhafter Weise erzeugen, wenn in der Unterstation die Nennspannung des jeweiligen Bahnbetriebselements überschritten und in der letzten Unterstation die Nennspannung des jeweiligen Bahnbetriebselements nicht erreichbar ist.

Die Erfindung betrifft ferner eine Stromversorgung für an einer Bahnstrecke angeordnete Bahnbetriebselemente mit mindestens einer Unterstation mit einer Stromversorgungsuntereinheit für mindestens jeweils ein angeschlossenes der Bahnbetriebselemente, bei dem mittels einer eingangsseitigen Kontrolleinheit der Unterstation der Stromverbrauch in der Unterstation definiert in Schritten mit entsprechender Änderung der Spannung der Stromversorgungsuntereinheit bis zur Nennspannung des Bahnbetriebselements an der Unterstation unter Erzeugung einer kodierten Nachricht verändert wird. Die Erfindung stellt sich die Aufgabe, eine solche Stromversorgung funktionssicher auszuführen.

Zur Lösung dieser Aufgabe dient die erfindungsgemäße Stromversorgung nach Anspruch 8. Bei dieser ist vorgesehen, dass an einer Kopfstation, an welche die mindestens eine Unterstation angeschlossen ist, eine Ausgangsspannung zur Verteilung auf die mindestens eine Unterstation zur Verfügung gestellt ist, wobei eine Kontrolleinrichtung der Kopfstation, welche über eine elektrische Verbindung mit einer Stromversorgungseinrichtung der Kopfstation verbunden ist, eingerichtet ist, über eine weitere elektrische Verbindung auf die Stromversorgungseinrichtung einzuwirken und auf die kodierte Nachricht hin die Ausgangsspannung unter Erzielung der Nennspannung für das Bahnbetriebselement an der weiteren Stromversorgungsuntereinheit entsprechend zu verändern, und dass die Stromversorgungsuntereinheit bei Erreichen der Nennspannung mit dem Bahnbetriebselement verbunden ist.

Mit einer solchen Ausgestaltung der erfindungsgemäßen Stromversorgungseinrichtung lässt sich eine funktionssichere Stromversorgung des weiteren Bahnbetriebselements erreichen.

Bei der erfindungsgemäßen Stromversorgung ist die Ausgestaltung nicht auf eine Kopfstation mit einer einzigen Unterstation beschränkt, sondern es sind in vorteilhafter Weise mit der Stromversorgungsuntereinheit ausgangsseitig eine weitere Stromversorgungsuntereinheit einer weiteren Unterstation verbunden und es ändert sich mittels einer Kontrollanordnung der weiteren Unterstation der Stromverbrauch in der weiteren Unterstation definiert in Schritten mit entsprechender Änderung der Ausgangsspannung der Kontrolleinrichtung der Kopfstation und der Spannung an der Stromversorgungsuntereinheit bis zur Nennspannung des Bahnbetriebselements der weiteren Unterstation unter Erzeugung einer kodierten Nachricht; dabei ist die weitere Stromversorgungsuntereinheit bei Erreichen der Nennspannung mit dem Bahnbetriebselement verbunden.

Eine Beschränkung auf die Verwendung nur einer einzigen weiteren Unterstation ist keinesfalls gegeben, sondern es lassen sich eine Vielzahl von Unterstationen entlang einer Bahnstrecke vorsehen, wobei dies selbstverständlich davon abhängig ist, welche Spannung an der Kopfstation insgesamt zur Verfügung gestellt wird, um diese dann auf die verschiedenen Unterstationen zu verteilen.

Ferner ist es bei der erfindungsgemäßen Stromversorgung vorteilhaft, wenn die Kontrolleinrichtung, die Kontrolleinheit und die Kontrollanordnung schaltbare Verbraucher zur Änderung der Spannung in Schritten und zur Erzeugung der kodierten Nachrichten aufweist.

Zur weiteren Erläuterung der Erfindung ist in
- Fig. 1: ein Ausführungsbeispiel einer Stromversorgung mit einer Kopfstation und einer Unterstation und in
- Fig. 2: ein Ausführungsbeispiel der erfindungsgemäßen Stromversorgung mit einer Kopfstation und drei Unterstationen wiedergegeben.

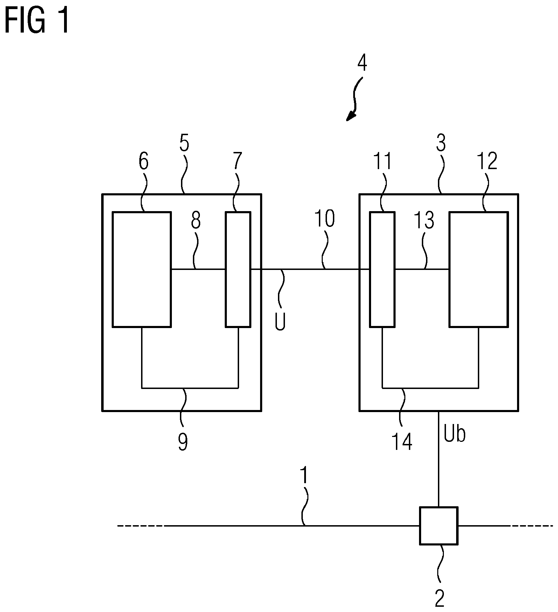

Wie Fig. 1 erkennen lässt, sind an einer Bahnstrecke 1 Bahnbetriebselemente 2 angeordnet, bei denen es sich um Stellglieder oder Sensoren handeln kann. Die Bahnbetriebselemente 2 sind mit einer Unterstation 3 in einer Stromversorgung 4 verbunden, die in unten noch näher beschriebener Weise die Stromversorgung für die Betriebselemente 2 sicherstellt. Die Unterstation 3 liegt in Reihe mit einer Kopfstation 5, die mit einer Stromversorgungseinrichtung 6 und einer Kontrolleinrichtung 7 ausgerüstet ist.

Die Stromversorgungseinrichtung 6 ist über eine elektrische Verbindung 8 mit der Kontrolleinrichtung 7 verbunden. Außerdem verläuft zwischen der Stromversorgungseinrichtung 6 und der Kontrolleinrichtung 7 eine weitere Verbindungsleitung 9, über die die Kontrolleinrichtung 7 auf die Stromversorgungseinrichtung 6 einwirkt.

Die Kopfstation 5 ist über eine elektrische Verbindung 10 mit der Unterstation 3 verbunden, und zwar mit einer Kontrolleinheit 11. Die Unterstation 3 weist eine Stromversorgungsuntereinheit 12 auf, die über eine Verbindungsleitung 13 mit dem Ausgang der Kontrolleinheit 11 und über eine weitere Verbindungsleitung 14 mit einem Steuerausgang dieser Kontrolleinheit 11 verbunden ist.

Die dargestellte Stromversorgung arbeitet in folgender Weise: Wird zum Zeitpunkt des Einschaltens eine Spannung U durch die Kontrolleinrichtung 7 der Kopfstation 5 erzeugt, die deutlich geringer als eine Nennspannung der Bahnbetriebselemente 2 an der Unterstation 3 ist, kann die Unterstation 3 mit Hilfe der Kontrolleinheit 11 durch einen definierten ein- und ausschaltbaren Strombereich, der beispielsweise durch kleine schaltbare zusätzliche Verbraucher in der Kontrolleinheit 11 realisiert wird, die Kontrolleinrichtung 7 der Kopfstation 5 auffordern, die Spannung U am Ausgang der Kopfstation 5 um einen weiteren Schritt zu erhöhen. Durch ein gezieltes Ein-/Ausschalten eines oder mehrerer Verbraucher in der Kontrolleinheit 11 kann dabei eine bestimmte Nachricht codiert werden. Ist eine erforderliche Betriebsspannung Ub am Ausgang der Stromversorgungsuntereinheit 12 noch nicht erreicht, wird die Spannung U an der Kopfstation 5 erneut erhöht. Die Kopfstation 5 wartet die Statusmeldung der Unterstation 3 ab, interpretiert diese nach ihrem Eintreffen und leitet die entsprechende Maßnahme zu einer Erhöhung oder Verringerung der Spannung ein. Ist die gewünschte Spannung Ub der Nennspannung der Stromversorgungsuntereinheit 12 gleich, wird dies signalisiert und die Stromversorgungsuntereinheit wird zugeschaltet. Wird durch den dadurch hervorgerufenen Energiebedarf wiederum eine bestimmte Spannungsschwelle unterschritten, wird erneut eine Erhöhung der Spannung U an der Kopfstation 5 nachgefragt. Liegt die Spannung hier in einem definierten Bereich, wird ein "OK" signalisiert. Überschreitet die Spannung Ub an der Unterstation 3 einen bestimmten Schwellenwert, kann dies auf dieselbe Art und Weise der Kopfstation 5 signalisiert werden, die daraufhin dann die erforderlichen Maßnahmen einer Spannungsreduktion einleiten kann. Diese Situation kann eintreten, wenn ein starker Verbraucher, der einen hohen Spannungsabfall längs der Energiezuführung verursacht, abgeschaltet wird.

In der Kopfstation 5 werden die codierten Nachrichten überwacht. Ergibt sich, dass eine codierte Nachricht ausbleibt, dann wird dies als eine Leitungsunterbrechung signalisiert. Tritt eine erwartete Spannungserhöhung nicht ein, dann wird daraus auf einen Isolationsschaden geschlossen. Bei der Stromversorgung wird also ein Regelungssystem realisiert.

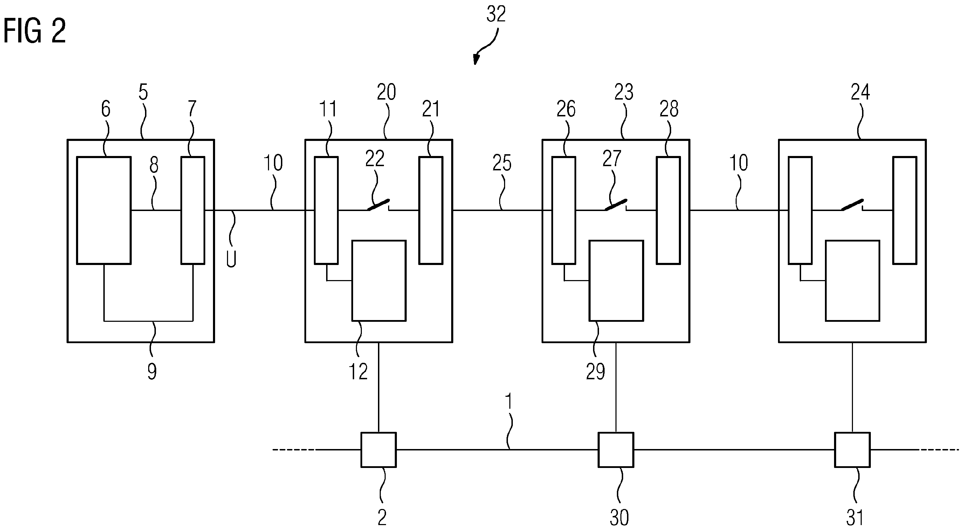

Bei dem Ausführungsbeispiel gemäß Fig. 2 sind die Elemente, die denen nach Fig. 1 entsprechen, mit denselben Bezugszeichen versehen. Man erkennt, dass bei diesem Ausführungsbeispiel eine weitere Unterstation 23 sowie eine zusätzliche Unterstation 24 in Reihe mit der Kopfstation 5 und der einen Unterstation 20 liegen. Außerdem ist erkennbar, dass in der Unterstation 20 in Abweichung von dem Ausführungsbeispiel gemäß Fig. 1 ein Kontrollaufbau 21 vorgesehen ist, der einerseits über einen Schalter 22 mit der einen Kontrolleinheit 11 und anderseits über eine elektrische Verbindung 25 mit einer Kontrollanordnung 26 der weiteren Unterstation 23 verbunden ist. An die Kontrollanordnung 26 ist über einen Schalter 27 ein weiterer Kontrollaufbau 28, der dem Kontrollaufbau 2 entspricht, sowie eine weitere Stromversorgungsuntereinheit 29 angeschlossen.

Die zusätzliche Unterstation 24 ist ebenso aufgebaut, wie die eine Unterstation 20 sowie die weitere Unterstation 23.

Alle Unterstationen 20 sowie 23 und 24 sind über jeweils Betriebselemente 2, 30 und 31 an der Bahnstrecke 1 angeordnet, um auch hier für einen sicheren Bahnbetrieb mittels Stellgliedern oder Sensoren zu sorgen.

Bei diesem Aufbau der Stromversorgung 32 gemäß Fig. 2 wird zunächst die eine Unterstation 20 - wie oben bereits beschrieben - in Betrieb genommen und danach die weitere Unterstation 23 und gegebenenfalls die zusätzliche Unterstation 24. Dabei wird in der weiteren Unterstation 23 mittels der Kontrollanordnung 26 durch schaltbare zusätzliche Verbraucher über den Kontrollaufbau 21 die Kontrolleinrichtung 7 der Kopfstation 5 veranlasst, die Spannung U am Ausgang der Kopfstation 5 in Schritten zu verändern. Danach wird die eine Unterstation 20 wieder überprüft und gegebenenfalls nachjustiert. Danach wird die weitere Unterstation 23 zugeschaltet und die beiden Unterstationen 20 und 23 gegebenenfalls nachjustiert.

Kommt es zu einer Situation, bei der an der weiteren Unterstation 23 die erforderliche Spannung noch nicht erreicht ist, an der einen Unterstation 20 aber die Nennspannung bereits überschritten ist, wird der Vorgang mit einer Fehlermeldung an der Kopfstation 5 abgebrochen oder gegebenenfalls nur eine verringerte Anzahl von Unterstationen in Betrieb genommen.

### Bezugszeichenliste

- 1: Bahnstrecke
- 2,30,31: Bahnbetriebselemente, Betriebselemente
- 3: Unterstation
- 4,32: Stromversorgung
- 5: Kopfstation
- 6: Stromversorgungseinrichtung
- 7: Kontrolleinrichtung
- 8: elektrische Verbindung
- 9: elektrische Verbindung
- 10: elektrische Verbindung
- 11: Kontrolleinheit
- 12: Stromversorgungsuntereinheit
- 13: Verbindungsleitung
- 14: Verbindungsleitung
- 20: Unterstation
- 21: Kontrollaufbau
- 22: Schalter
- 23: weitere Unterstation
- 24: zusätzliche Unterstation
- 25: elektrische Verbindung
- 26: Kontrollanordnung
- 25: Stromversorgungsuntereinheit
- 27: Schalter
- 28: weiterer Kontrollaufbau
- 29: weitere Stromversorgungsuntereinheit
- U: Spannung
- Ub: Betriebsspannung

## Patentansprüche

1. Verfahren zur Stromversorgung für an einer Bahnstrecke (1) angeordnete Bahnbetriebselemente (2) mit mindestens einer Unterstation (20) mit einer Stromversorgungsuntereinheit (12) für mindestens jeweils ein angeschlossenes der Bahnbetriebselemente (2), bei dem mittels einer eingangsseitigen Kontrolleinheit (11) der Unterstation (20) der Stromverbrauch in der Unterstation (20) definiert in Schritten mit entsprechender Änderung der Spannung der Stromversorgungsuntereinheit (12) bis zur Nennspannung (Ub) des Bahnbetriebselements (2) an der Unterstation (20) unter Erzeugung einer kodierten Nachricht verändert wird,
**dadurch gekennzeichnet,**
- **dass** an einer Kopfstation (5), an welche die mindestens eine Unterstation (20) angeschlossen ist, eine Ausgangsspannung (U) zur Verteilung auf die mindestens eine Unterstation (20) zur Verfügung gestellt wird, wobei eine Kontrolleinrichtung (7) der Kopfstation (5), welche über eine elektrische Verbindung (8) mit einer Stromversorgungseinrichtung (6) der Kopfstation (5) verbunden ist, über eine weitere elektrische Verbindung (9) auf die Stromversorgungseinrichtung (6) einwirkt und auf die kodierte Nachricht hin die Ausgangsspannung (U) unter Erzielung der Nennspannung (Ub) für das Bahnbetriebselement (2) an der Stromversorgungsuntereinheit (12) entsprechend verändert, und
- **dass** die Stromversorgungsuntereinheit (12) bei Erreichen der Nennspannung (Ub) dem Bahnbetriebselement (2) zugeschaltet wird.

2. Verfahren nach Anspruch 1, **dadurch gekennzeichnet, dass** mit einer mit der Kontrolleinheit (11) verbindbaren weiteren Kontrolleinheit (21) der einen Unterstation (20) eine Kontrollanordnung (26) mit einer nachgeordneten weiteren Stromversorgungsuntereinheit (29) einer weiteren Unterstation (23) verbunden wird und mittels der Kontrollanordnung (26) der weiteren Unterstation (23) der Stromverbrauch in der weiteren Unterstation (23) definiert in Schritten mit entsprechender Änderung der Ausgangsspannung (U) der Kontrolleinrichtung (7) der Kopfstation (5) und der Spannung an der Stromversorgungsuntereinheit (12) bis zur Nennspannung des Bahnbetriebselements (30) der weiteren Unterstation (23) unter Erzeugung einer kodierten Nachricht verändert wird, wobei die weitere Stromversorgungsuntereinheit (29) bei Erreichen der Nennspannung dem Bahnbetriebselement (30) zugeschaltet wird.

3. Verfahren nach Anspruch 1 oder 2,
**dadurch gekennzeichnet, dass**
in der Kontrolleinheit (11) und in der Kontrollanordnung (26) schaltbare Verbraucher zur Änderung der Spannung in definierten Schritten und zur Erzeugung der kodierten Nachrichten verwendet werden.

4. Verfahren nach einem der vorangehenden Ansprüche,
**dadurch gekennzeichnet, dass**
die kodierten Nachrichten in der Kopfstation (5) überwacht werden.

5. Verfahren nach einem der vorangehenden Ansprüche,
**dadurch gekennzeichnet, dass**
mit einem Ausbleiben einer kodierten Nachricht eine Leitungsunterbrechung signalisiert wird.

6. Verfahren nach einem der Ansprüche 1 bis 4,
**dadurch gekennzeichnet, dass**
mit einem Ausbleiben einer erwarteten Spannungserhöhung ein Isolationsschaden signalisiert wird.

7. Verfahren nach einem der Ansprüche 1 bis 3,
**dadurch gekennzeichnet, dass**
eine Fehlermeldung erzeugt wird, wenn in der Unterstation die Nennspannung des jeweiligen Betriebselements überschritten und in der letzten Unterstation die Nennspannung des jeweiligen Betriebselements nicht erreichbar ist.

8. Stromversorgung (4) für an einer Bahnstrecke (1) angeordnete Bahnbetriebselemente (2) mit mindestens einer Unterstation (20) mit einer Stromversorgungsuntereinheit (12) für mindestens jeweils ein angeschlossenes der Bahnbetriebselemente (2),
bei der eine eingangsseitige Kontrolleinheit (11) der Unterstation (20) den Stromverbrauch in der Unterstation (20) definiert in Schritten mit entsprechender Änderung der Spannung der Stromversorgungsuntereinheit (12) bis zur Nennspannung des Bahnbetriebselements (2) an der Unterstation (20) unter Erzeugung einer kodierten Nachricht ändert,
**dadurch gekennzeichnet,**
- **dass** an einer Kopfstation (5), an welche die mindestens eine Unterstation (20) angeschlossen ist, eine Ausgangsspannung (U) zur Verteilung auf die mindestens eine Unterstation (20) zur Verfügung gestellt ist, wobei eine Kontrolleinrichtung (7) der Kopfstation (5), welche über eine elektrische Verbindung (8) mit einer Stromversorgungseinrichtung (6) der Kopfstation (5) verbunden ist, eingerichtet ist, über eine weitere elektrische Verbindung (9) auf die Stromversorgungseinrichtung (6) einzuwirken und auf die kodierte Nachricht hin die Ausgangsspannung (U) unter Erzielung der Nennspannung (Ub) für das Bahnbetriebselement (2) an der weiteren Stromversorgungsuntereinheit (12) entsprechend zu verändern, und
- **dass** die Stromversorgungsuntereinheit (12) bei Erreichen der Nennspannung mit dem Bahnbetriebselement (2) verbunden ist.

9. Stromversorgung nach Anspruch 8,
**dadurch gekennzeichnet, dass**
mit einer mit der Kontrolleinheit (11) verbindbaren weiteren Kontrolleinheit (21) der einen Unterstation (3) eine Kontrollanordnung (26) mit einer nachgeordneten weiteren Stromversorgungsuntereinheit (29) einer weiteren Unterstation (23) verbunden ist und sich mittels der Kontrollanordnung (26) der weiteren Unterstation (23) der Stromverbrauch in der weiteren Unterstation (23) definiert in Schritten mit entsprechender Änderung der Ausgangsspannung (U) der Kontrolleinrichtung (7) der Kopfstation (5) und der Spannung an der Stromversorgungsuntereinheit (12) bis zur Nennspannung des Bahnbetriebselements (30) der weiteren Unterstation (23) unter Erzeugung einer kodierten Nachricht ändert, wobei
sich die weitere Stromversorgungsuntereinheit (29) bei Erreichen der Nennspannung dem Bahnbetriebselement (30) zuschaltet.

10. Stromversorgung nach Anspruch 8 oder 9,
**dadurch gekennzeichnet, dass**
die Kontrolleinheit (11) und die Kontrollanordnung (26) schaltbare Verbraucher zur Änderung der Spannung in Schritten und zur Erzeugung der kodierten Nachrichten aufweist.

## Claims

1. Method for supplying power to railway operating elements (2) arranged on a railway line (1), with at least one substation (20) with a power supply subunit (12) for at least one respective connected railway operating element (2), in which method by means of an input-side control unit (11) of the substation (20) the current consumption in the substation (20) is defined in increments, with corresponding modification of the voltage of the power supply subunit (12) to match the rated voltage (Ub) of the railway operating element (2) at the substation (20), by generating a coded message,
**characterised in that**
- an output voltage (U) for distribution on the at least one substation (20) is made available on a terminal station (5), to which the at least one substation (20) is connected, wherein a control device (7) of the terminal station (5), which is connected to a power supply device (6) of the terminal station (5) by way of an electrical connection (8), acts on the power supply device (6) by way of a further electrical connection (9) and in response to the coded message, modifies the output voltage (U) accordingly while attaining the rated voltage (Ub) for the railway operating element (2) at the power supply subunit (12), and
- the power supply subunit (12) is connected to the railway operating element (2) when the rated voltage (Ub) is reached.

2. Method according to claim 1, **characterised in that** a control arrangement (26) having a downstream further power supply subunit (29) of a further substation (23) is connected to a further control unit (21), which can be connected to the control unit (11), of the one substation (20), and by means of the control arrangement (26) of the further substation (23) the current consumption in the further substation (23) is defined in increments, with corresponding modification of the output voltage (U) of the control device (7) of the terminal station (5) and of the voltage at the power supply subunit (12) to match the rated voltage of the railway operating element (30) of the further substation (23), by generating a coded message, wherein the further power supply subunit (29) is connected to the railway operating element (30) when the rated voltage is reached.

3. Method according to claim 1 or 2,
**characterised in that**
switchable power-consuming loads are used in the control unit (11) and in the control arrangement (26) in order to modify the voltage in defined increments and in order to generate the coded messages.

4. Method according to one of the preceding claims,
**characterised in that**
the coded messages are monitored in the terminal station (5).

5. Method according to one of the preceding claims,
**characterised in that**
a line break is signalled if a coded message fails to arrive.

6. Method according to one of claims 1 to 4,
**characterised in that**
an insulation defect is signalled if an expected voltage increase fails to occur.

7. Method according to one of claims 1 to 3,
**characterised in that**
an error message is generated if the rated voltage of the respective operating element is exceeded in the substation and the rated voltage of the respective operating element cannot be reached in the last substation.

8. Power supply (4) for railway operating elements (2) arranged on a railway line (1), with at least one substation (20) with a power supply subunit (12) for at least one respective connected railway operating element (2),
in which an input-side control unit (11) of the substation (20) defines the current consumption in the substation (20 in increments, with corresponding modification of the voltage of the power supply subunit (12) to match the rated voltage of the railway operating element (2) of the substation (20), by generating a coded message,
**characterised in that**
an output voltage (U) for distribution on the at least one substation (20) is made available on a terminal station (5), to which the at least one substation (20) is connected, wherein a control device (7) of the terminal station (5), which is connected to a power supply device (6) of the terminal station (5) by way of an electrical connection (8), is designed to act on the power supply device (6) by way of a further electrical connection (9) and in response to the coded message, modifies the output voltage (U) accordingly while attaining the rated voltage (Ub) for the railway operating element (2) at the further power supply subunit (12), and
- the power supply subunit (12) is connected to the railway operating element (2) when the rated voltage is reached.

9. Power supply according to claim 8,
**characterised in that**
a control arrangement (26) having a downstream further power supply subunit (29) of a further substation (23) is connected to a further control unit (21) of the one substation (3), which further control unit (21) can be connected to the control unit (11), and by means of the control arrangement (26) of the further substation (23) the current consumption in the further substation (23) is defined in increments, with corresponding modification of the output voltage (U) of the control device (7) of the terminal station (5) and of the voltage at the power supply subunit (12) to match the rated voltage of the railway operating element (30) of the further substation (23), by generating a coded message, wherein the further power supply subunit (29) connects itself to the railway operating element (30) when the rated voltage is reached.

10. Power supply according to claim 8 or 9,
**characterised in that**
the control unit (11) and the control arrangement (26) comprise switchable power-consuming loads in order to modify the voltage in increments and in order to generate the coded messages.

## Revendications

1. Procédé d'alimentation en électricité d'éléments (2) de fonctionnement de ligne disposés sur un tronçon (1) de ligne comprenant au moins une sous-station (20) ayant une sous-unité (12) d'alimentation en électricité d'au moins respectivement l'un raccordé des éléments (2) de fonctionnement de ligne, dans lequel au moyen d'une unité (11) de contrôle du côté de l'entrée de la sous-station (20), on modifie, avec production d'un message codé, la consommation d'électricité dans la sous-station (20) définie en pas avec variation correspondante de la tension de la sous-unité (12) d'alimentation en électricité jusqu'à la tension (Ub) nominale de l'élément (2) de fonctionnement de ligne à la sous-station (20),
**caractérisé**
- **en ce que** à une station (5) de tête, à laquelle est raccordée la au moins une sous-station (20), on met à disposition une tension (U) de sortie à répartir sur la au moins une sous-station (20), dans lequel un dispositif (7) de contrôle de la station (5) de tête, qui est relié par une liaison (8) électrique à un dispositif (6) d'alimentation en électricité de la station (5) de tête, agit par une autre liaison (9) électrique sur le dispositif (6) d'alimentation en électricité et modifie de manière correspondante sur le message codé la tension (U) de sortie en atteignant la tension (Ub) nominale pour l'élément (2) de fonctionnement de ligne à la sous-unité (12) d'alimentation électrique, et
- **en ce que** l'on branche sur l'élément (2) de fonctionnement de ligne la sous-unité (12) d'alimentation en électricité lorsque la tension (Ub) nominale est atteinte.

2. Procédé suivant la revendication 1, **caractérisé en ce que** par une autre unité (21) de contrôle, pouvant être reliée à l'unité (11) de contrôle, de la une sous-station (20), on relie un agencement (26) de contrôle à une autre sous-unité (29) d'alimentation en électricité en aval d'une autre sous-station (23) et, au moyen de l'agencement (26) de contrôle de l'autre sous-station (23), on modifie, en produisant un message codé, la consommation d'électricité dans l'autre sous-station (23) défini en pas avec variation correspondante de la tension (U) de sortie du dispositif (7) de contrôle de la station (5) de tête et de la tension à la sous-unité (12) d'alimentation en électricité jusqu'à la tension nominale de l'élément (30) de fonctionnement de ligne de l'autre sous-station (23), dans lequel on branche sur l'élément (30) de fonctionnement de ligne l'autre sous-unité (29) d'alimentation en électricité lorsque la tension nominale est atteinte.

3. Procédé suivant la revendication 1 ou 2,
**caractérisé en ce que**
on utilise dans l'unité (11) de contrôle et dans l'agencement (26) de contrôle, on utilise des consommateurs manœuvrables pour la modification de la tension en des pas définis et pour la production des messages codés.

4. Procédé suivant l'une des revendications précédentes,
**caractérisé en ce que**
l'on contrôle les messages codés dans la station (5) de tête.

5. Procédé suivant l'une des revendications précédentes,
**caractérisé en ce que**
l'on signale une interruption de ligne par une absence d'un message codé.

6. Procédé suivant l'une des revendications 1 à 4,
**caractérisé en ce que**
on signale un dommage d'isolation par une absence d'une élévation escomptée de la tension.

7. Procédé suivant l'une des revendications 1 à 3,
**caractérisé en ce que**
on produit un message de défaut, si, dans la sous-station, la tension nominale de l'élément de fonctionnement respectif est dépassée et si, dans la dernière sous-station, la tension nominale de l'élément de fonctionnement respectif ne peut pas être atteinte.

8. Alimentation (4) en électricité d'éléments (2) de fonctionnement de ligne disposés sur un tronçon (1) de ligne ayant au moins une sous-station (20) avec une sous-unité (12) d'alimentation en électricité d'au moins respectivement l'un raccordé des éléments (2) de fonctionnement de ligne,
dans laquelle une unité (11) de contrôle du côté de l'entrée de la sous-station (20) modifie, en produisant un message codé la consommation d'électricité dans la sous-station (20) de manière définie en pas avec variation correspondante de la tension de la sous-unité (11) d'alimentation en électricité jusqu'à la tension nominale de l'élément (2) de fonctionnement de ligne à la sous-station (20),
**caractérisée**
- à une station (5) de tête, à laquelle la au moins une sous-station (20) est raccordée, une tension (U) de sortie à répartir sur la au moins une sous-station (20) est mise à disposition, dans laquelle un dispositif (7) de contrôle de la station (5) de tête, qui est relié par une liaison (8) électrique à un dispositif (6) d'alimentation en électricité de la station (5) de tête, est conçu pour agir par une autre liaison (9) électrique sur le dispositif (6) d'alimentation en électricité et pour modifier de manière correspondante sur le message codé la tension (U) de sortie en atteignant la tension (Ub) nominale pour l'élément (2) de fonctionnement de ligne sur l'autre sous-unité (12) d'alimentation en électricité, et
- en ce que la sous-unité (12) d'alimentation en électricité est reliée à l'élément (2) de fonctionnement de ligne lorsque la tension nominale est atteinte.

9. Alimentation en électricité suivant la revendication 8,
**caractérisée en ce que**
par une autre unité (21) de contrôle, pouvant être reliée à l'unité (11) de contrôle, de la une sous-station (3), un agencement (26) de contrôle est relié à une autre sous-unité (29) d'alimentation en électricité en aval d'une autre sous-station (23) et au moyen de l'agencement (26) de contrôle de l'autre sous-station (23), la consommation de courant se modifie, avec production d'un message codé, dans l'autre sous-station (23) définie en pas avec variation correspondante de la tension (U) de sortie du dispositif (7) de contrôle de la station (5) de tête et de la tension à la sous-unité (12) d'alimentation en électricité jusqu'à la tension nominale de l'élément (30) de fonctionnement de ligne de l'autre sous-station (23), dans laquelle
l'autre sous-unité (29) d'alimentation en électricité se branche sur l'élément (30) de fonctionnement de ligne lorsque la tension nominale est atteinte.

10. Alimentation en électricité suivant la revendication 8 ou 9,
**caractérisée en ce que**
l'unité (11) de contrôle et l'agencement (26) de contrôle a des consommateurs commutables pour la variation de la tension en pas et pour la production des messages codés.
